# EUROPÄISCHE PATENTSCHRIFT

(11) **EP 1 387 457 B1**
(45) Veröffentlichungstag und Bekanntmachung des Hinweises auf die Patenterteilung: **24.12.2008**
(21) Anmeldenummer: 03015290.4
(22) Anmeldetag: 07.07.2003
(51) Int. Cl.: H02G 3/08

(54) **Elektrische Installationsdose**
Electrical installation box
Boîtier d'installation électrique

(30) Priorität: 18.07.2002 DE 20210911 U
(43) Veröffentlichungstag der Anmeldung: 04.02.2004
(73) Patentinhaber: Günther Spelsberg GmbH & Co. KG, 58579 Schalksmühle (DE)
(72) Erfinder: Wasserfuhr, Friedel, 51688 Wipperfürth (DE); Hauck, Dirk, 58579 Schalksmühle (DE)
(74) Vertreter: Michalski Hüttermann & Partner Patentanwälte

(56) Entgegenhaltungen:
- US-A- 5 942 728
- PATENT ABSTRACTS OF JAPAN vol. 1995, no. 02, 31. März 1995 (1995-03-31) & JP 06 313922 A (NIKON CORP), 8. November 1994 (1994-11-08)

## Beschreibung

Die Erfindung betrifft eine elektrische Installationsdose, mit einem Gehäuse und einem Deckel zum Verschließen des Gehäuses, wobei zwischen dem Deckel und dem Gehäuse eine Dichtung zur Abdichtung des Innenraums der elektrischen Installationsdose gegenüber Nässe vorgesehen ist und der Deckel an dem Gehäuse mittels eines Scharniers befestigt ist, das eine Schwenkbewegung des Deckels um eine Schwenkachse ermöglicht.

Mit dem Begriff "elektrische Installationsdose" sind solche elektrischen Dosen gemeint, denen elektrische Kabel zugeführt werden und/oder von denen elektrische Kabel abgeführt werden, wobei die elektrischen Kabel in der elektrischen Installationsdose miteinander verbunden sind und/oder weitere Installationen in der elektrischen Installationsdose vorgesehen sind. Im einfachsten Fall kann es sich bei der elektrischen Installationsdose um eine gemeinhin als Verbindungsdose bezeichnete Dose handeln, die z.B. an einer Wand befestigt wird und zur Herstellung von Schaltungen dient.

Die eingangs beschriebenen elektrischen Installationsdosen mit einem Gehäuse und einem Deckel zum Verschließen des Gehäuses, wobei eine Abdichtung des Innenraums der elektrischen Installationsdose gegenüber Nässe vorgesehen ist, werden insbesondere auch als sogenannte Solardosen verwendet, also für auf z.B. Häuserdächern installierte Solaranlagen. Eine Abdichtung gegenüber Nässe ist bei einer solchen Verwendung der elektrischen Installationsdose zwingend erforderlich, ist eine auf einem Hausdach installierte elektrische Installationsdose doch Witterungseinflüssen, wie Regen, typischerweise ungeschützt ausgesetzt.

Bei der Verwendung einer elektrischen Installationsdose als den Witterungseinflüssen ungeschützt ausgesetzte Solardose, ist es gewünscht, über eine solche elektrische Installationsdose zu verfügen, die während der gesamten Lebensdauer der Solaranlage nach Möglichkeit nicht ausgetauscht werden muß. Dazu muß sichergestellt sein, daß die Funktionen der elektrischen Installationsdose über den gesamten Nutzungszeitraum uneingeschränkt erhalten bleiben. Insbesondere darf sich die angesprochene Abdichtung gegenüber Nässe nicht verschlechtern, da in den Innenraum der elektrischen Installationsdose eintretendes Wasser im allgemeinen nach einer gewissen Zeit zwangsläufig zu einem Defekt führt.

Aus der GB 9971 ist eine wasserdichte elektrische Installationsdose bekannt, bei der eine umlaufende Dichtung zwischen dem Deckel und dem oberen Rand der Seitenwände des Gehäuses vorgesehen ist, die zur Abdichtung des Gehäuses zwischen den Seitenwänden und dem Deckel komprimiert wird. Ferner ist aus der JP 06 313 922 A ein wasserdichtes Gehäuse für eine Kamera bekannt. Dort ist eine Dichtung für einen Deckel vorgesehen, die radial wirkt, also gegenüber den Seitenwänden des Gehäuses abdichtet.

Es ist die Aufgabe der Erfindung, eine solche elektrische Installationsdose anzugeben, die wartungsfrei über einen langen Zeitraum verwendet werden kann.

Ausgehend von der eingangs beschriebenen elektrischen Installationsdose ist die zuvor hergeleitete und aufgezeigte Aufgabe dadurch gelöst, daß als Dichtung an den seitlichen Rändern des Deckels eine umlaufende Dichtwulst angeordnet ist, die im geschlossenen Zustand des Deckels an den Innenwänden des Gehäuses dichtend anliegt, und daß die Schwenkachse senkrecht zu ihrem Verlauf parallel zu der Ebene des geschlossenen Deckels verschiebbar ist.

Erfindungsgemäß erfolgt also die Abdichtung nicht zwischen der Innenwand des Deckels einerseits und den im geschlossenen Zustand des Deckels parallel zu der Innenwand des Deckels verlaufenden oberen Rändern der Wände des Gehäuses, sondern zwischen den seitlichen Rändern des Deckels und den Innenwänden des Gehäuses. Damit wird vermieden, separate Einrichtungen vorsehen zu müssen, die ein im wesentlichen gleichbleibend festes Andrücken des Deckels auf das Gehäuse mit dazwischen angeordneter Dichtung gewährleisten. Das die eigentliche Abdichtung bewirkende Komprimieren der Dichtung erfolgt nämlich schon dadurch, daß die Dichtung aufgrund entsprechender Dimensionierungen des Deckels bzw. des Gehäuses zwischen den seitlichen Rändern des Deckels und den Innenwänden des Gehäuses komprimiert wird und damit dort dichtend anliegt.

Eine besonders bevorzugte Ausführungsform, mit der eine sichere Abdichtung bei mechanisch guter Stabilität erzielt werden kann, besteht darin, daß die seitlichen Ränder des Deckels eine umlaufende Nut aufweisen, in der die Dichtwulst angeordnet ist und aus der die Dichtwulst hervorsteht. Aufgrund der in den seitlichen Rändern des Deckels umlaufend angeordneten Nut, in der die Dichtwulst angeordnet ist, wird die Dichtwulst fixiert, so daß sie auch beim Schließen des Deckels nicht aus ihrer gewünschten Anordnung verschoben werden kann.

Ist in den seitlichen Rändern des Deckels eine umlaufende Nut vorgesehen, in der die Dichtwulst angeordnet ist und aus der die Dichtwulst hervorsteht, so ist gemäß einer bevorzugten Weiterbildung der Erfindung ferner der Deckel auf seiner Oberseite, also oberhalb der Dichtung, so ausgebildet, daß im geschlossenen Zustand des Deckels die seitlichen Ränder des Deckels oberhalb der Dichtung im wesentlichen direkt an den Innenwänden des Gehäuses anliegen. Vorzugsweise ist dabei lediglich so viel Spiel vorhanden, daß der Deckel problemlos in das Gehäuse eingefügt werden kann. Damit wird erreicht, daß die Dichtung im geschlossen Zustand des Deckels nach außen hin praktisch vollständig abgeschirmt ist und somit keiner vorschnellen Alterung durch Witterungseinflüsse, wie insbesondere starker UV-Bestrahlung, ausgesetzt ist.

Bei dieser Ausgestaltung der erfindungsgemäßen elektrischen Installationsdose kann ferner vorgesehen sein, daß die die Nut begrenzenden Wände des Deckels auf der Innenseite gegenüber den die Nut auf der Außenseite des Deckels begrenzenden Wände zurückgezogen sind, so daß der Deckel über die Dichtwulst auf einer im oberen Bereich der Innenwände des Gehäuses ausgebildeten Stufe aufliegen kann. Eine solche Stufe dient einerseits der Fixierung des Deckels im geschlossenen Zustand nach innen hin, so daß der Deckel nicht weiter in das Innere des Gehäuses hineinrutschen kann, und kann darüber hinaus als zusätzliche Dichtfläche wirken.

Erfindungsgemäß ist vorgesehen, daß die Schwenkachse senkrecht zu ihrem Verlauf parallel zu der Ebene des geschlossenen Deckels verschiebbar ist. Während des Schließens des Deckels durch ein Verschwenken auf das offene Gehäuse wird also zusätzlich eine Verschiebemöglichkeit bereitgestellt, so daß durch Überlagerung der Schwenkbewegung einerseits und der Verschiebebewegung andererseits der Deckel nahezu senkrecht von oben in das offene Gehäuse eingesetzt werden kann. Auf diese Weise kommt es zur geringst möglichen Beanspruchung der Dichtwulst, die insbesondere zwischen der dem Scharnier unmittelbar benachbarten Innenwand des Gehäuses und dem entsprechenden Rand des Deckels aufgrund einer reinen Schwenkbewegung beim Hineinbewegen des Deckels in das offene Gehäuse stark und über das für die Abdichtung erforderliche Maß hinaus komprimiert werden würde.

Die Tatsache, daß die Schwenkachse senkrecht zu ihrem Verlauf parallel zu der Ebene des geschlossenen Deckels verschiebbar ist, bedeutet jedoch nicht, daß der Deckel auch im geschlossenen Zustand in wesentlichem Umfang verschiebbar ist. Im geschlossenen Zustand des Deckels liegt schließlich die Dichtwulst dichtend zwischen den seitlichen Rändern des Deckels und den Innenwänden des Gehäuses an, so daß der Deckel bezüglich Querbewegungen praktisch vollständig fixiert ist.

Die Möglichkeit, die Schwenkachse senkrecht zu ihrem Verlauf parallel zu der Ebene des geschlossenen Deckels zu verschieben, kann auf unterschiedliche Weisen geschaffen werden, insbesondere nämlich z. B. mittels einer Mehrzahl von hintereinander geschalteten Scharnieren. Gemäß einer bevorzugten Weiterbildung der Erfindung ist jedoch vorgesehen, daß das Scharnier einen Scharnierstift und eine Scharnieröffnung aufweist, der Scharnierstift in der Scharnieröffnung drehbar gelagert ist und die Scharnieröffnung als Langloch ausgebildet ist. Dabei erstreckt sich das Langloch vorzugsweise genau in die Richtung, in der auch die Bewegbarkeit der Schwenkachse gewährleistet sein soll, vorliegend also im wesentlichen parallel zum geschlossenen Deckel.

Zur weiteren Erläuterung der Erfindung wird im folgenden ein bevorzugtes Ausführungsbeispiel der Erfindung unter Bezugnahme auf die Zeichnung im Detail beschrieben. In der Zeichnung zeigt
- Fig. 1: eine elektrische Installationsdose gemäß einem bevorzugten Ausführungsbeispiel der Erfindung in einer perspektivischen Ansicht,
- Fig. 2: die Ausgestaltung des Scharniers der elektrischen Installationsdose gemäß dem bevorzugten Ausführungsbeispiel der Erfindung in einer Detailansicht und

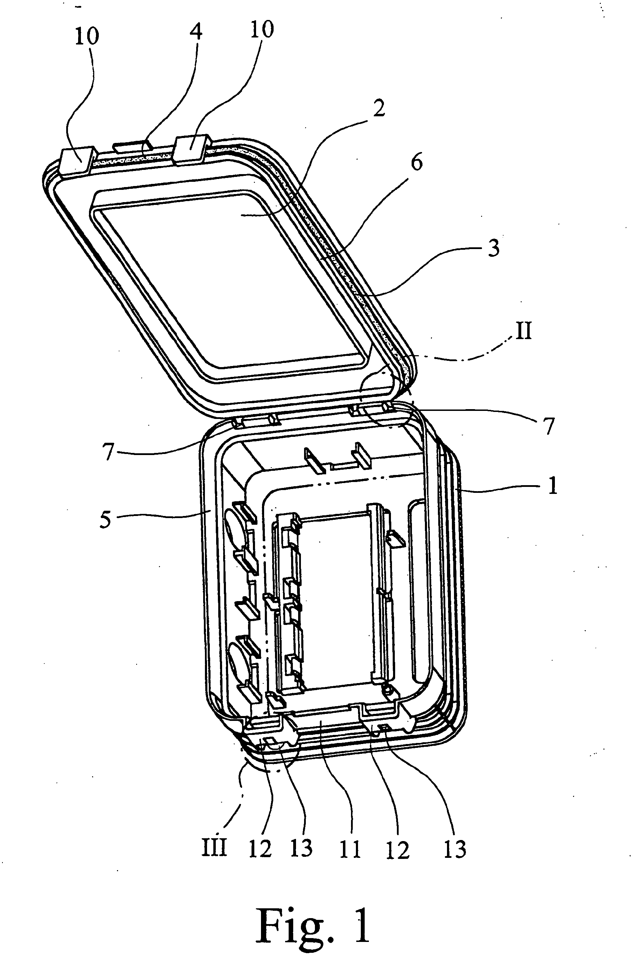

Wie aus Fig. 1 ersichtlich, weist die elektrische Installationsdose gemäß dem vorliegend beschriebenen bevorzugtem Ausführungsbeispiel der Erfindung ein Gehäuse 1 und einen Deckel 2 auf, mit dem das Gehäuse 1 verschlossen werden kann. Auf den seitlichen Rändern 4 des Deckels 2 ist als Abdichtung des Innenraums der elektrischen Installationsdose gegenüber Nässe eine Dichtwulst 3 vorgesehen. Im geschlossenen Zustand des Deckels 2 liegt die Dichtwulst 3 zwischen den seitlichen Rändern 4 des Deckels 2 und den Innenwänden 5 des Gehäuses 1 dichtend an. Dazu ist in den seitlichen Rändern 4 des Deckels 2 eine umlaufenden Nut 6 vorgesehen, wobei die Dichtwulst 3 derart in der umlaufenden Nut 6 angeordnet ist, daß sie aus der Nut 6 über ihren gesamten umlaufenden Bereich hervorsteht. Auf diese Weise kommt es im geschlossenen Zustand des Deckels 2 zu einer klemmenden Abdichtung zwischen den seitlichen Rändern 4 des Deckels 2 und den Innenwänden 5 des Gehäuses 1 mittels der Dichtwulst 3.

Die umlaufende Nut 6 in den seitlichen Rändern 4 des Deckels 2 ist derart ausgebildet, daß in geschlossenem Zustand des Deckels 2 dessen seitliche Ränder 4 oberhalb der Dichtung im wesentlichen direkt an den Innenwänden 5 des Gehäuses 1 anliegen. Damit ist die Dichtwulst nach außen hin praktisch vollständig von dem oberen Bereich des Deckels 2 überdeckt, so daß die Dichtwulst 3 nach außen hin gut abgeschirmt ist, was insbesondere bei der Verwendung der elektrischen Installationsdose als Solardose auf z. B. einem Hausdach insofern nützlich ist, als daß Witterungseinflüsse, wie UV-Strahlung, zu keiner vorzeitigen Alterung der Dichtwulst 3 führen können.

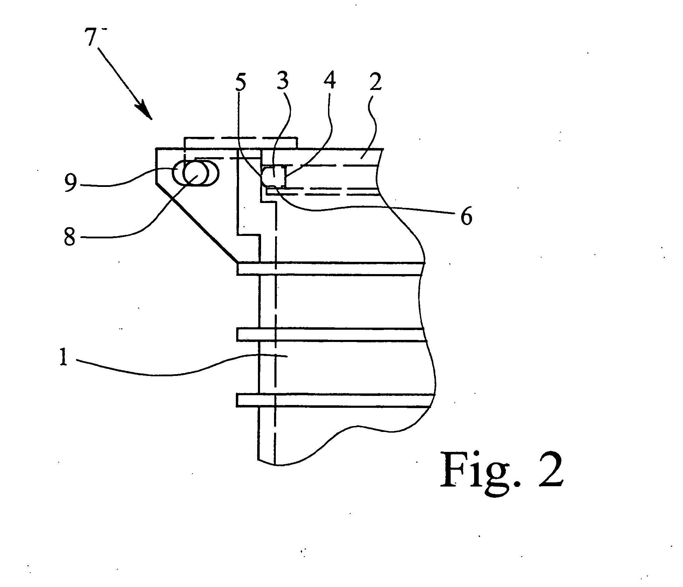

Der Deckel 2 ist in dem Gehäuse 1 mittels eines Scharniers 7 befestigt, so daß eine Schwenkbewegung des Deckels 2 um eine Schwenkachse ermöglicht wird. Wie nun insbesondere aus Fig. 2 ersichtlich, weist das Scharnier 7 einen Scharnierstift 8 und eine Scharnieröffnung 9 auf, die als Langloch ausgebildet ist. Die Erstreckung des Langlochs verläuft dabei parallel zur Ebene des geschlossenen Deckels 2. Auf diese Weise wird eine solche Bewegung der Schwenkachse ermöglicht, die parallel zu der Ebene des geschlossenen Deckels 2 und senkrecht zur Schwenkachse selbst verläuft. Durch die Überlagerung des Verschwenkens des Deckels 2 um die Schwenkachse einerseits und des Verschiebens der Schwenkachse längs der als Langloch ausgebildeten Scharnieröffnung 9 andererseits ergibt sich die Möglichkeit, den Deckel 2 im wesentlichen senkrecht von oben her in das Gehäuse 1 einzusetzen. Wie weiter oben bereits ausgeführt, kommt es dadurch nur zu einer sehr geringen mechanischen Beanspruchung der Dichtwulst 3, da ein unnötiges Einklemmen der Dichtwulst 3 beim Schließen des Deckels 2 zwischen dessen seitlichen Rändern 4 einerseits und den Innenwänden 5 des Gehäuses 1 andererseits vermieden wird.

Fig. 1 ist auch entnehmbar, daß bei der elektrischen Installationsdose gemäß dem vorliegend beschriebenen bevorzugten Ausführungsbeispiel der Erfindung der Deckel 2 Rasthaken 10 aufweist, die im geschlossen Zustand des Deckels 2 mit einer in einer Wand 11 des Gehäuses 1 vorgesehenen Rastausnehmungen 12 zusammenwirken, um den Deckel 2 geschlossen zu halten.

## Patentansprüche

1. Elektrische Installationsdose, mit einem Gehäuse (1) und einem Deckel (2) zum Verschließen des Gehäuses (1), wobei zwischen dem Deckel (2) und dem Gehäuse (1) eine Dichtung zur Abdichtung des Innenraums der elektrischen Installationsdose gegenüber Nässe vorgesehen ist und der Deckel (2) an dem Gehäuse (1) mittels eines Scharniers (7) befestigt ist, das eine Schwenkbewegung des Deckels (2) um eine Schwenkachse ermöglicht, **dadurch gekennzeichnet, daß** als Dichtung an den seitlichen Rändern (4) des Deckels (2) eine umlaufende Dichtwulst (3) angeordnet ist, die im geschlossenen Zustand des Deckels (2) an den Innenwänden (5) des Gehäuses (1) dichtend anliegt, und daß die Schwenkachse senkrecht zu ihrem Verlauf parallel zu der Ebene des geschlossenen Deckels (2) verschiebbar ist.

2. Elektrische Installationsdose nach Anspruch 1, **dadurch gekennzeichnet, daß** die seitlichen Ränder (4) des Deckels (2) eine umlaufenden Nut (6) aufweisen, in der die Dichtwulst (3) angeordnet ist und aus der die Dichtwulst (3) hervorsteht.

3. Elektrische Installationsdose nach Anspruch 2, **dadurch gekennzeichnet, daß** im geschlossenen Zustand des Deckels (2) die seitlichen Ränder (4) des Deckels (2) oberhalb der Dichtwulst (3) im wesentlichen direkt an den Innenwänden (5) des Gehäuses (1) anliegen.

4. Elektrische Installationsdose nach einem der Ansprüche 1 bis 3, **dadurch gekennzeichnet, daß** das Scharnier (7) einen Scharnierstift (8) und eine Scharnieröffnung (9) aufweist, der Scharnierstift (7) in der Scharnieröffnung (9) drehbar gelagert ist und die Scharnieröffnung (9) als Langloch ausgebildet ist.

## Claims

1. Electrical installation box, with a housing (1) and a cover (2) for closing the housing (1), a seal for sealing off the interior of the electrical installation box from moisture being provided between the cover (2) and the housing (1), and the cover (2) being fastened on the housing (1) by means of a hinge (7), which allows for a pivoting movement of the cover (2) about a pivot axis, **characterized in that** a peripheral sealing bead (3), which bears in sealing fashion against the inner walls (5) of the housing (1) in the closed state of the cover (2), is arranged as a seal at the lateral edges (4) of the cover (2), and **in that** the pivot axis is capable of being displaced perpendicular to the profile thereof parallel to the plane of the closed cover (2).

2. Electrical installation box according to Claim 1, **characterized in that** the lateral edges (4) of the cover (2) have a peripheral groove (6), in which the sealing bead (3) is arranged and from which the sealing bead (3) protrudes.

3. Electrical installation box according to Claim 2, **characterized in that**, in the closed state of the cover (2), the lateral edges (4) of the cover (2) above the sealing bead (3) bear substantially directly against the inner walls (5) of the housing (1).

4. Electrical installation box according to one of Claims 1 to 3, **characterized in that** the hinge (7) has a hinge pin (8) and a hinge opening (9), the hinge pin (7) is mounted rotatably in the hinge opening (9), and the hinge opening (9) is in the form of a slot.

## Revendications

1. Boîte d'installation électrique, avec un boîtier (1) et avec un couvercle (2) pour la fermeture du boîtier (1), un joint étant prévu entre le couvercle (2) et le boîtier (1) pour rendre étanche l'espace intérieur de la boîte d'installation électrique par rapport à l'humidité, et le couvercle (2) étant fixé au boîtier (1) au moyen d'une charnière (7) qui permet un mouvement pivotant du couvercle (2) autour d'un axe de pivotement, **caractérisée en ce qu'**il est agencé comme joint sur les bords latéraux (4) du couvercle (2) un boudin d'étanchéité (3) qui en fait le tour et qui, lorsque le couvercle (2) est fermé, repose sur les parois intérieures (5) du boîtier (1) de manière à assurer l'étanchéité et **en ce que** l'axe de pivotement peut être déplacé perpendiculairement à son extension et parallèlement au plan du couvercle (2) fermé.

2. Boîte d'installation électrique selon la revendication 1, **caractérisée en ce que** les bords latéraux (4) du couvercle (2) comportent une rainure qui en fait le tour, dans laquelle le boudin d'étanchéité (3) est agencé et de laquelle le boudin d'étanchéité (3) dépasse.

3. Boîte d'installation électrique selon la revendication 2, **caractérisée en ce que**, lorsque le couvercle (2) est fermé, les bords latéraux (4) du couvercle (2) reposent au-dessus du boudin d'étanchéité (3) globalement directement sur les parois intérieures (5) du boîtier (1).

4. Boîte d'installation électrique selon l'une des revendications 1 à 3, **caractérisée en ce que** la charnière (7) comporte une tige de charnière (8) et un trou de charnière (9), **en ce que** la tige de charnière (7) est logée de manière à pouvoir tourner dans le trou de charnière (9) et **en ce que** le trou de charnière (9) est conçu comme un trou oblong.
